# EUROPEAN PATENT SPECIFICATION

(11) **EP 4 638 266 B1**
(45) Date of publication and mention of the grant of the patent: **21.10.2026**
(21) Application number: 23844619.9
(22) Date of filing: 14.12.2023
(51) Int. Cl.: B64C 27/605

(54) **ROTOR BLADE ASSEMBLY FOR UNMANNED AERIAL VEHICLE SYSTEMS AND METHODS**
ROTORBLATTANORDNUNG FÜR UNBEMANNTE LUFTFAHRZEUGSYSTEME UND VERFAHREN
ENSEMBLE PALE DE ROTOR POUR SYSTÈMES ET PROCÉDÉS DE VÉHICULE AÉRIEN SANS PILOTE

(30) Priority: 19.12.2022 US 202263433739 P
(43) Date of publication of application: 29.10.2025
(73) Proprietor: FLIR UNMANNED AERIAL SYSTEMS AS, 1395 Hvalstad (NO)
(72) Inventor: FLATLANDSMO, Josef, 1395 Hvalstad (NO); FLATTUM, Ole André, 1395 Hvalstad (NO)
(74) Representative: Murgitroyd & Company
(86) International application number: PCT/US2023/084102
(87) International publication number: WO 2024/137346

(56) References cited:
- CN-A- 110 143 275
- US-A1- 2020 391 847
- US-A1- 2021 237 853
- US-B1- 11 021 234
- US-B2- 9 156 548

## Description

### TECHNICAL FIELD

One or more embodiments relate generally to unmanned aerial vehicles (UAVs) and more particularly, for example, to systems and methods directed to a rotor blade assembly for a UAV.

### BACKGROUND

Controlling the pitch of the rotor blades of an unmanned aerial vehicle (UAV) alters and directs an associated lift force, which enables the UAV to gain or lose altitude, turn, and advance in a controlled manner. A conventional way of controlling the pitch of the rotor blades includes the use of a two-component swashplate - one nonrotating lower plate connected to an actuating system of the UAV, and one rotating upper plate including rigid pitch links and pitch horns, for example, connecting the rotor blades to the swashplate. Many, if not all, parts that are connected and move relative to one another may require a bearing and/or joint of some kind in the connection. These bearings and joints increase weight, cause friction, are susceptible to wear, and need maintenance.

Another conventional way of controlling the pitch of the rotor blades includes the use of one or more wheels that ride on a nonrotating plate, with the wheels held against the plate via a metal bracket and wheel assembly. Such configurations, however, may allow the wheels to lose contact with the plate if the magnetic forces are too weak. For example, an increase of blade pitch may decrease the magnetic forces and therefore the contact force between the wheels and the plate. When cyclic pitch control is utilized, the magnetic forces and wheel pressure varies (e.g., sinusoidally) through a rotation of a rotor, which may be a source of system inefficiency. Friction forces between the wheels and the plate may also cause energy losses within the system.

Therefore, there is a need in the art for systems and methods that address the deficiencies noted above, other deficiencies known in the industry, or at least offers an alternative to current techniques. For example, improvements are needed for an improved rotor blade assembly for a UAV.
US 11021234 discloses a pitch adjustment mechanism for adjusting pitches of propeller blades, the pitch adjustment mechanism including a propeller hub enclosing a geared mechanism that cooperates with a compound gearbox having first and second planetary stages to adjust pitches of propeller blades. Using the pitch adjustment mechanism, the pitches of propeller blades may be rotated at least 90 degrees, and up to and exceeding 360 degrees, in order to effect thrust reversals and/or adjust thrust profiles.

### SUMMARY

According to a first aspect of the present invention, there is provided a system according to claim 1.

According to a second aspect of the present invention, there is provided a method of assembling a rotor blade assembly according to claim 8.

According to a third aspect of the present invention, there is provided a method of operating a rotor blade assembly according to claim 13.

The scope of the present disclosure is defined by the claims. A more complete understanding of embodiments of the present disclosure will be afforded to those skilled in the art, as well as a realization of additional advantages thereof, by a consideration of the following detailed description of one or more
embodiments. Reference will be made to the appended sheets of drawings that will first be described briefly.

### BRIEF DESCRIPTION OF THE DRAWINGS

FIG. 1 illustrates a block diagram of a system, in accordance with an embodiment of the disclosure.
FIG. 2A illustrates a diagram of a UAV, in accordance with an embodiment of the disclosure.
FIG. 2B illustrates another diagram of the UAV, in accordance with an embodiment of the disclosure.
FIG. 3 illustrates a diagram of a base station or controller, in accordance with an embodiment of the disclosure.
FIG. 4 illustrates a diagram of a rotor blade assembly in a collective pitch control position, in accordance with an embodiment of the disclosure.
FIG. 5A illustrates a first cross-sectional view of the rotor blade assembly taken at line 5-5 of FIG. 4, in accordance with an embodiment of the disclosure.
FIG. 5B illustrates a second cross-sectional view of the rotor blade assembly taken at line 5-5 of FIG. 4, in accordance with an embodiment of the disclosure.
FIG. 6 illustrates an enlarged view of the rotor blade assembly, in accordance with an embodiment of the disclosure.
FIG. 7 illustrates a diagram of the rotor blade assembly in a cyclic pitch control position, in accordance with an embodiment of the disclosure.
FIG. 8 illustrates a process of assembling a rotor blade assembly, in accordance with an embodiment of the disclosure.
FIG. 9 illustrates a process of operating a rotor blade assembly, in accordance with an embodiment of the disclosure.

Embodiments of the present disclosure and their advantages are best understood by referring to the detailed description that follows. It is noted that sizes of various components and distances between these components are not drawn to scale in the figures. It should be appreciated that like reference numerals are used to identify like elements illustrated in one or more of the figures.

### DETAILED DESCRIPTION

The detailed description set forth below is intended as a description of various configurations of the subject technology and is not intended to represent the only configurations in which the subject technology can be practiced. The appended drawings are incorporated herein and constitute a part of the detailed description. The detailed description includes specific details for the purpose of providing a thorough understanding of the subject technology. However, it will be clear and apparent to those skilled in the art that the subject technology is not limited to the specific details set forth herein and may be practiced using one or more embodiments. In one or more instances, structures and components are shown in block diagram form in order to avoid obscuring the concepts of the subject technology. One or more embodiments of the subject disclosure are illustrated by and/or described in connection with one or more figures and are set forth in the claims.

Various systems and methods are provided for a rotor blade assembly of a UAV. In various conventional systems, the pitch of the rotor blades may be independent of each other, such that pitch control of one rotor blade does not affect the pitch control of another rotor blade. Embodiments of the present disclosure, however, connects or otherwise ties the rotor blades dependently, which may be referred to as cross-coupling. For example, a pitch adjustment of one rotor blade may cause a corresponding force on another rotor blade. In this manner, the forces acting on one rotor blade depend directly upon a position or movement of another rotor blade.

Embodiments of the present disclosure may provide a force behavior opposite to conventional systems. For example, when collective pitch increases, the wheel pressure on a nonrotating swashplate may also increase (e.g., via a torsion spring). Conversely, when collective pitch decreases, the wheel pressure also decreases (e.g., due to lower tension in the torsion spring). This is the opposite behavior to many conventional systems, such as those utilizing magnetic forces to provide contact forces between the wheels and the plate.

Systems and methods described herein may increase system efficiency. For instance, the number of coils and/or the diameter of the torsion spring may be selected to achieve equal or near equal tension throughout all pitch angles needed for pitch control. In effect, the torsion spring can be finely tuned to allow for the least amount of wheel pressure, and therefore also friction forces and energy loss, that is necessary to constrain the wheels fully to the swashplate.

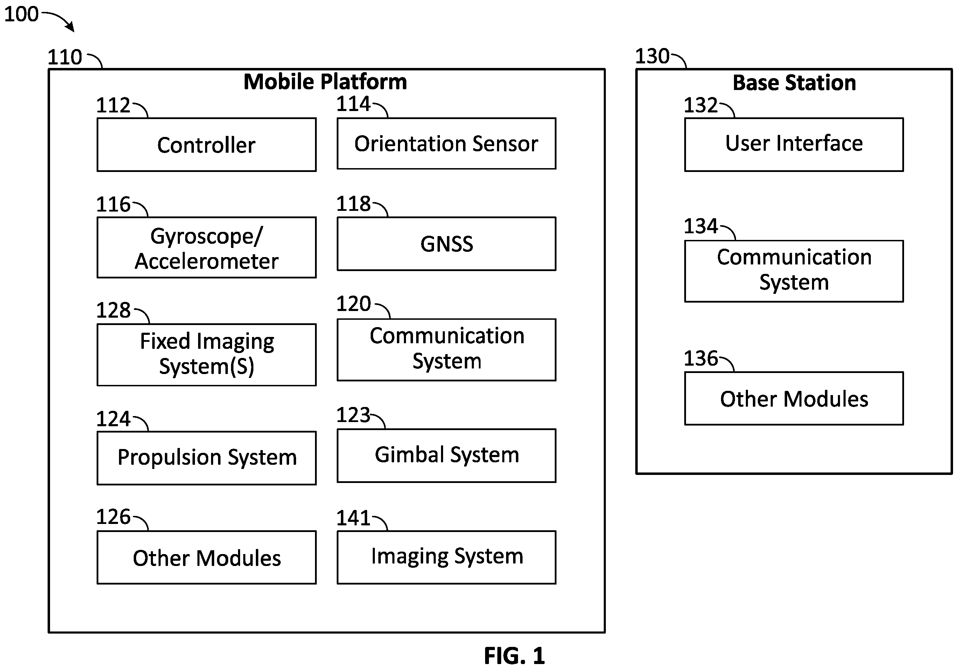

FIG. 1 illustrates a block diagram of a system 100, in accordance with an embodiment of the disclosure. Referring to FIG. 1, system 100 includes an unmanned aerial vehicle (UAV) 110 and a base station 130, in accordance with one or more embodiments of the disclosure. UAV 110 may be any pilotless aircraft, such as an airplane, helicopter, drone, or other machine capable of flight (e.g., a mobile platform). For example, UAV 110, which may be referred to as a drone or an unmanned aerial system (UAS), may be any pilotless aircraft for military missions, public services, agricultural application, and recreational video and photo capturing, without intent to limit. Depending on the application, UAV 110 may by piloted autonomously (e.g., via onboard computers) or via remote control. UAV 110 may include a fixed-wing, rotorcraft, or quadcopter design, although other configurations are contemplated. As a result, the term "UAV" or "drone" is characterized by function and not by shape or flight technology.

In various embodiments, UAV 110 may be configured to fly over a scene or survey area, to fly through a structure, or to approach a target and image or sense the scene, structure, or target, or portions thereof, via an imaging system 141 (e.g., using a gimbal system 123 to aim imaging system 141 at the scene, structure, or target, or portions thereof, for example). Resulting imagery and/or other sensor data may be processed (e.g., by controller 112) and displayed to a user through use of user interface 132 (e.g., one or more displays such as a multi-function display (MFD), a portable electronic device such as a tablet, laptop, or smart phone, or other appropriate interface) and/or stored in memory for later viewing and/or analysis. In some embodiments, system 100 may be configured to use such imagery and/or sensor data to control operation of UAV 110 and/or imaging system 141, such as controlling gimbal system 123 to aim imaging system 141 towards a particular direction, or controlling propulsion system 124 to move UAV 110 to a desired position in a scene or structure or relative to a target.

UAV 110 may be implemented as a mobile platform configured to move or fly and position and/or aim imaging system 141 (e.g., relative to a selected, designated, or detected target). As shown in FIG. 1, UAV 110 may include one or more of a controller 112, an orientation sensor 114, a gyroscope/accelerometer 116, a global navigation satellite system (GNSS) 118, a communication system 120, a gimbal system 123, a propulsion system 124, and other modules 126. Operation of UAV 110 may be substantially autonomous and/or partially or completely controlled by base station 130, which may include one or more of a user interface 132, a communication system 134, and other modules 136. In other embodiments, UAV 110 may include one or more of the elements of base station 130, such as with various types of manned aircraft, terrestrial vehicles, and/or surface or subsurface watercraft. Imaging system 141 may be physically coupled to UAV 110 via gimbal system 123 and may be configured to capture sensor data (e.g., visible spectrum images, infrared images, narrow aperture radar data, and/or other sensor data) of a target position, area, and/or object(s) as selected and/or framed by operation of UAV 110 and/or base station 130.

Controller 112 may be implemented as any appropriate logic circuit and/or device (e.g., processing device, microcontroller, processor, application specific integrated circuit (ASIC), field programmable gate array (FPGA), memory storage device, memory reader, or other device or combinations of devices) that may be adapted to execute, store, and/or receive appropriate instructions, such as software instructions implementing a control loop for controlling various operations of UAV 110 and/or other elements of system 100, such as gimbal system 123, imaging system 141, fixed imaging systems 128, or the propulsion system 124, for example. Such software instructions may also implement methods for processing infrared images and/or other sensor signals, determining sensor information, providing user feedback (e.g., through user interface 132), querying devices for operational parameters, selecting operational parameters for devices, or performing any of the various operations described herein.

In addition, a non-transitory medium may be provided for storing machine readable instructions for loading into and execution by controller 112. In these and other embodiments, controller 112 may be implemented with other components where appropriate, such as volatile memory, non-volatile memory, one or more interfaces, and/or various analog and/or digital components for interfacing with devices of system 100. For example, controller 112 may be adapted to store sensor signals, sensor information, parameters for coordinate frame transformations, calibration parameters, sets of calibration points, and/or other operational parameters, over time, for example, and provide such stored data to a user using user interface 132. In some embodiments, controller 112 may be integrated with one or more other elements of UAV 110 such as gimbal system 123, imaging system 141, and fixed imaging system(s) 128, for example.

In some embodiments, controller 112 may be configured to substantially continuously monitor and/or store the status of and/or sensor data provided by one or more elements of UAV 110, gimbal system 123, imaging system 141, fixed imaging system(s) 128, and/or base station 130, such as the position and/or orientation of UAV 110, gimbal system 123, imaging system 141, and/or base station 130, for example.

Orientation sensor 114 may be implemented as one or more of a compass, float, accelerometer, and/or other device capable of measuring an orientation of UAV 110 (e.g., magnitude and direction of roll, pitch, and/or yaw, relative to one or more reference orientations such as gravity and/or Magnetic North), gimbal system 123, fixed imaging system(s) 128, and/or other elements of system 100, and providing such measurements as sensor signals and/or data that may be communicated to various devices of system 100.

Gyroscope/accelerometer 116 may be implemented as one or more inertial measurement units (IMUs), electronic sextants, semiconductor devices, integrated chips, accelerometer sensors, accelerometer sensor systems, or other devices capable of measuring angular velocities/accelerations and/or linear accelerations (e.g., direction and magnitude) of UAV 110 and/or other elements of system 100 and providing such measurements as sensor signals and/or data that may be communicated to other devices of system 100 (e.g., user interface 132, controller 112).

GNSS 118 may be implemented according to any global navigation satellite system, including a GPS, GLONASS, and/or Galileo based receiver and/or other device capable of determining absolute and/or relative position of UAV 110 (e.g., or an element of UAV 110) based on wireless signals received from space-born and/or terrestrial sources (e.g., eLoran, and/or other at least partially terrestrial systems), for example, and capable of providing such measurements as sensor signals and/or data (e.g., coordinates) that may be communicated to various devices of system 100 and other nodes participating in a mesh network. In some embodiments, GNSS 118 may include an altimeter, for example, or may be used to provide an absolute altitude.

Communication system 120 may be implemented as any wired and/or wireless communication system configured to transmit and receive analog and/or digital signals between elements of system 100 and other nodes participating in a mesh network. For example, communication system 120 may be configured to receive flight control signals and/or data from base station 130 and provide them to controller 112 and/or propulsion system 124. In other embodiments, communication system 120 may be configured to receive images and/or other sensor information (e.g., visible spectrum and/or infrared still images or video images) from fixed imaging system(s) 128 and/or imaging system 141 and relay the sensor data to controller 112 and/or base station 130. In some embodiments, communication system 120 may be configured to support spread spectrum transmissions, for example, and/or multiple simultaneous communications channels between elements of system 100. Wireless communication links may include one or more analog and/or digital radio communication links, such as WiFi and others, as described herein, and may be direct communication links established between elements of system 100, for example, or may be relayed through one or more wireless relay stations configured to receive and retransmit wireless communications. Communication links established by communication system 120 may be configured to transmit data between elements of system 100 substantially continuously throughout operation of system 100, where such data includes various types of sensor data, control parameters, and/or other data, as described herein.

Gimbal system 123 may be implemented as an actuated gimbal mount, for example, that may be controlled by controller 112 to stabilize and direct imaging system 141 relative to a target or to aim imaging system 141 according to a desired direction and/or relative orientation or position. For example, controller 112 may receive a control signal from one or more components of system 100 to cause gimbal system 123 to adjust a position of imaging system 141 as described in the disclosure. As such, gimbal system 123 may be configured to provide a relative orientation of imaging system 141 (e.g., relative to an orientation of UAV 110) to controller 112 and/or communication system 120 (e.g., gimbal system 123 may include its own orientation sensor 114). In other embodiments, gimbal system 123 may be implemented as a gravity driven mount (e.g., non-actuated). In various embodiments, gimbal system 123 may be configured to provide power, support wired communications, and/or otherwise facilitate operation of articulated sensor/imaging system 141. In further embodiments, gimbal system 123 may be configured to couple to a laser pointer, range finder, and/or other device, for example, to support, stabilize, power, and/or aim multiple devices (e.g., imaging system 141 and one or more other devices) substantially simultaneously.

In some embodiments, gimbal system 123 may be adapted to rotate imaging system 141 +- 90 degrees, or up to 360 degrees, in a vertical plane relative to an orientation and/or position of UAV 110. In further embodiments, gimbal system 123 may rotate imaging system 141 to be parallel to a longitudinal axis or a lateral axis of UAV 110 as UAV 110 yaws, which may provide 360 degree ranging and/or imaging in a horizontal plane relative to UAV 110. In various embodiments, controller 112 may be configured to monitor an orientation of gimbal system 123 and/or imaging system 141 relative to UAV 110, for example, or an absolute or relative orientation of an element of imaging system 141 (e.g., a sensor of imaging system 141). Such orientation data may be transmitted to other elements of system 100 for monitoring, storage, or further processing, as described herein.

Propulsion system 124 may be implemented as one or more propellers, turbines, or other thrust-based propulsion systems, and/or other types of propulsion systems that can be used to provide motive force and/or lift to UAV 110 and/or to steer UAV 110. In some embodiments, propulsion system 124 may include multiple propellers (e.g., a tri, quad, hex, oct, or other type "copter") that can be controlled (e.g., by controller 112) to provide lift and motion for UAV 110 and to provide an orientation for UAV 110. In other embodiments, propulsion system 124 may be configured primarily to provide thrust while other structures of UAV 110 provide lift, such as in a fixed wing embodiment (e.g., where wings provide the lift) and/or an aerostat embodiment (e.g., balloons, airships, hybrid aerostats). In various embodiments, propulsion system 124 may be implemented with a portable power supply, such as a battery and/or a combustion engine/generator and fuel supply.

Fixed imaging system(s) 128 may be implemented as an imaging device fixed to the body of UAV 110 such that a position and orientation is fixed relative to the body of the mobile platform, according in various embodiments. Fixed imaging system(s) 128 may include one or more imaging modules, which may be implemented as a cooled and/or uncooled array of detector elements, such as visible spectrum and/or infrared sensitive detector elements, including quantum well infrared photodetector elements, bolometer or microbolometer based detector elements, type II superlattice based detector elements, and/or other infrared spectrum detector elements that can be arranged in a focal plane array. In various embodiments, an imaging module of a fixed imaging system 128 may include one or more logic devices that can be configured to process imagery captured by detector elements of the imaging module before providing the imagery to controller 112. Fixed imaging system(s) 128 may be arranged on the UAV 110 and configured to perform any of the operations or methods described herein, at least in part, or in combination with controller 112 and/or user interface 132. An example fixed imaging system(s) 128 configuration includes using 6 fixed imaging systems, each covering a 90-degree sector to give complete 360-degree coverage. Using on-chip down-sampling of the images provided by fixed imaging system(s) 128 to approximately the order of 128x128 pixels and recording at 1200 Hz, the fixed imaging system(s) 128 can track rotations of 1000-1500 degrees per second with an optical flow of less than one pixel per frame. The same one-pixel optical flow per frame criteria would be fulfilled when flying UAV 110 at speeds in excess of 10 m/s at 1 m distance from the surface (e.g., wall, ground, roof, etc.). When not sampling at high rates, these low-resolution fixed imaging system(s) 128 may consume little power and thus minimally impact an average power consumption for UAV 110. Thus, a motion-dependent frame rate adjustment may be used to operate efficiently where the frame rate can be kept high enough to maintain the one pixel optical-flow per the frame tracking criteria.

Other modules 126 may include other and/or additional sensors, actuators, communications modules/nodes, and/or user interface devices, for example, and may be used to provide additional environmental information related to operation of UAV 110, for example. In some embodiments, other modules 126 may include a humidity sensor, a wind and/or water temperature sensor, a barometer, an altimeter, a radar system, a proximity sensor, a visible spectrum camera or infrared camera (with an additional mount), an irradiance detector, and/or other environmental sensors providing measurements and/or other sensor signals that can be displayed to a user and/or used by other devices of system 100 (e.g., controller 112) to provide operational control of UAV 110 and/or system 100.

In some embodiments, other modules 126 may include one or more actuated and/or articulated devices (e.g., multi-spectrum active illuminators, visible and/or IR cameras, radars, sonars, and/or other actuated devices) coupled to UAV 110, where each actuated device includes one or more actuators adapted to adjust an orientation of the device, relative to UAV 110, in response to one or more control signals (e.g., provided by controller 112). Other modules 126 may include a stereo vision system configured to provide image data that may be used to calculate or estimate a position of UAV 110, for example, or to calculate or estimate a relative position of a navigational hazard in proximity to UAV 110. In various embodiments, controller 112 may be configured to use such proximity and/or position information to help safely pilot UAV 110 and/or monitor communication link quality with the base station 130.

User interface 132 of base station 130 may be implemented as one or more of a display, a touch screen, a keyboard, a mouse, a joystick, a knob, a steering wheel, a yoke, and/or any other device capable of accepting user input and/or providing feedback to a user. In various embodiments, user interface 132 may be adapted to provide user input (e.g., as a type of signal and/or sensor information transmitted by communication system 134 of base station 130) to other devices of system 100, such as controller 112. User interface 132 may also be implemented with one or more logic devices (e.g., similar to controller 112) that may be adapted to store and/or execute instructions, such as software instructions, implementing any of the various processes and/or methods described herein. For example, user interface 132 may be adapted to form communication links, transmit and/or receive communications (e.g., infrared images and/or other sensor signals, control signals, sensor information, user input, and/or other information), for example, or to perform various other processes and/or methods described herein.

In some embodiments, user interface 132 may be adapted to accept user input including a user-defined target heading, waypoint, route, and/or orientation for an element of system 100, for example, and to generate control signals to cause UAV 110 to move according to the target heading, route, and/or orientation, or to aim imaging system 141. In other embodiments, user interface 132 may be adapted to accept user input modifying a control loop parameter of controller 112, for example. In further embodiments, user interface 132 may be adapted to accept user input including a user-defined target attitude, orientation, and/or position for an actuated or articulated device (e.g., imaging system 141) associated with UAV 110, for example, and to generate control signals for adjusting an orientation and/or position of the actuated device according to the target altitude, orientation, and/or position. Such control signals may be transmitted to controller 112 (e.g., using communication system 134 and 120), which may then control UAV 110 accordingly.

Communication system 134 may be implemented as any wired and/or wireless communication system configured to transmit and receive analog and/or digital signals between elements of system 100 and/or nodes participating in a mesh network. For example, communication system 134 may be configured to transmit flight control signals or commands from user interface 132 to communication systems 120 or 144. In other embodiments, communication system 134 may be configured to receive sensor data (e.g., visible spectrum and/or infrared still images or video images, or other sensor data) from UAV 110. In some embodiments, communication system 134 may be configured to support spread spectrum transmissions, for example, and/or multiple simultaneous communications channels between elements of system 100. In various embodiments, communication system 134 may be configured to monitor the status of a communication link established between base station 130, UAV 110, and/or the nodes participating in the mesh network (e.g., including packet loss of transmitted and received data between elements of system 100 or the nodes of the mesh network, such as with digital communication links). Such status information may be provided to user interface 132, for example, or transmitted to other elements of system 100 for monitoring, storage, or further processing, as described herein.

Other modules 136 of base station 130 may include other and/or additional sensors, actuators, communications modules/nodes, and/or user interface devices used to provide additional environmental information associated with base station 130, for example. In some embodiments, other modules 136 may include a humidity sensor, a wind and/or water temperature sensor, a barometer, a radar system, a visible spectrum camera, an infrared camera, a GNSS, and/or other environmental sensors providing measurements and/or other sensor signals that can be displayed to a user and/or used by other devices of system 100 (e.g., controller 112) to provide operational control of UAV 110 and/or system 100 or to process sensor data to compensate for environmental conditions, such as an water content in the atmosphere approximately at the same altitude and/or within the same area as UAV 110 and/or base station 130, for example. In some embodiments, other modules 136 may include one or more actuated and/or articulated devices (e.g., multi-spectrum active illuminators, visible and/or IR cameras, radars, sonars, and/or other actuated devices), where each actuated device includes one or more actuators adapted to adjust an orientation of the device in response to one or more control signals (e.g., provided by user interface 132).

In general, each of the elements of system 100 may be implemented with any appropriate logic device (e.g., processing device, microcontroller, processor, application specific integrated circuit (ASIC), field programmable gate array (FPGA), memory storage device, memory reader, or other device or combinations of devices) that may be adapted to execute, store, and/or receive appropriate instructions, such as software instructions implementing a method for providing sensor data and/or imagery, for example, or for transmitting and/or receiving communications, such as sensor signals, sensor information, and/or control signals, between one or more devices of system 100. In addition, one or more non-transitory mediums may be provided for storing machine readable instructions for loading into and execution by any logic device implemented with one or more of the devices of system 100. In these and other embodiments, the logic devices may be implemented with other components where appropriate, such as volatile memory, non-volatile memory, and/or one or more interfaces (e.g., inter-integrated circuit (I2C) interfaces, mobile industry processor interfaces (MIPI), joint test action group (JTAG) interfaces (e.g., IEEE 1149.1 standard test access port and boundary-scan architecture), and/or other interfaces, such as an interface for one or more antennas, or an interface for a particular type of sensor).

Sensor signals, control signals, and other signals may be communicated among elements of system 100 using a variety of wired and/or wireless communication techniques, including voltage signaling, Ethernet, WiFi, Bluetooth, Zigbee, Xbee, Micronet, Cursor-on-Target (CoT) or other medium and/or short range wired and/or wireless networking protocols and/or implementations, for example. In such embodiments, each element of system 100 may include one or more modules supporting wired, wireless, and/or a combination of wired and wireless communication techniques. In some embodiments, various elements or portions of elements of system 100 may be integrated with each other, for example, or may be integrated onto a single printed circuit board (PCB) to reduce system complexity, manufacturing costs, power requirements, coordinate frame errors, and/or timing errors between the various sensor measurements. Each element of system 100 may include one or more batteries, capacitors, or other electrical power storage devices, for example, and may include one or more solar cell modules or other electrical power generating devices. In some embodiments, one or more of the devices may be powered by a power source for UAV 110, using one or more power leads. Such power leads may also be used to support one or more communication techniques between elements of system 100.

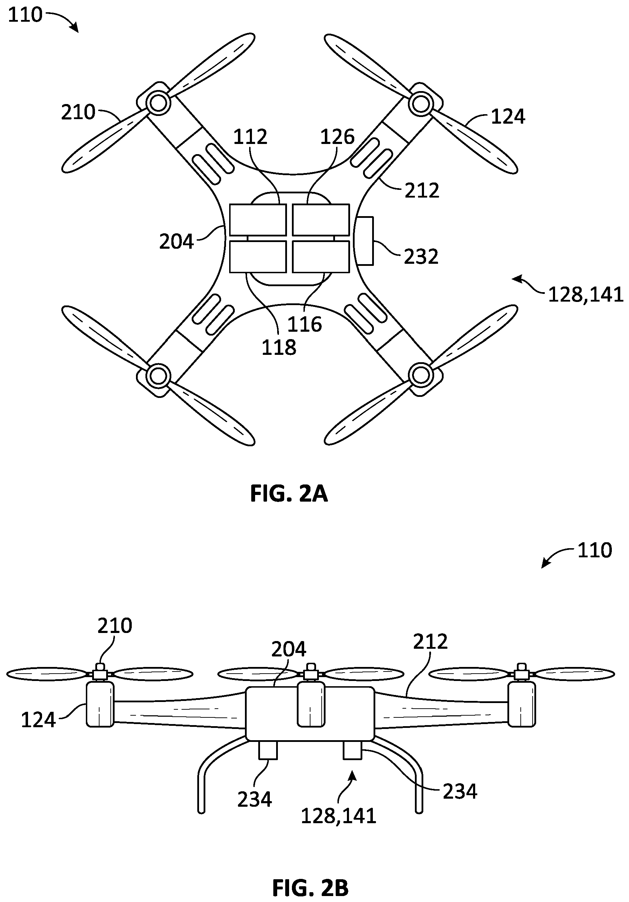

FIG. 2A illustrates a diagram of UAV 110. Referring to FIG. 2A, UAV 110 may include a body 204 and propulsion system 124. Propulsion system 124 may be configured to propel UAV 110 for flight. For example, propulsion system 124 may include one or more propellers 210 connected to body 204, such as via respective arms or wings 212 extending from body 204. Depending on the application, propellers 210 may have a fixed orientation, or propellers 210 may move, to provide a desired flight characteristic. Operation of propulsion system 124 may be substantially autonomous and/or partially or completely controlled by a remote system (e.g., a remote control, a tablet, a smartphone, base station 130, etc.).

Body 204 may be equipped with controller 112 that may include one or more logic devices. Each logic device, which may be referred to as an on-board computer or processor, may be implemented as any appropriate logic device (e.g., processing device, microcontroller, processor, application specific integrated circuit (ASIC), field programmable gate array (FPGA), memory storage device, memory reader, or other device or combinations of devices) that may be adapted to execute, store, and/or receive appropriate instructions, such as software instructions implementing a control loop for controlling various operations of UAV 110 and/or other elements of a system, for example. Such software instructions may implement methods for processing images and/or other sensor signals, determining sensor information, providing user feedback, querying devices for operational parameters, selecting operational parameters for devices, or performing any of the various operations described herein (e.g., operations performed by one or more devices of UAV 110).

In addition, a non-transitory medium may be provided for storing machine readable instructions for loading into and execution by controller 112. In these and other embodiments, controller 112 may be implemented with other components where appropriate, such as volatile memory, non-volatile memory, one or more interfaces, and/or various analog and/or digital components for interfacing with devices of UAV 110. For example, controller 112 may be adapted to store sensor signals, sensor information, and/or operational parameters, over time, for example, and provide such stored data to a user. In some embodiments, controller 112 may be integrated with one or more other elements of UAV 110, for example, or distributed as multiple logic devices within UAV 110.

Controller 112 may be configured to perform a set of operations. For example, controller 112 may be configured for flight control and position estimation, among other operations. For position estimation, UAV 110 may be equipped with GNSS 118 and/or gyroscope/accelerometer 116 to provide position measurements. For example, GNSS 118 and/or gyroscope/accelerometer 116 may provide frequent measurements to controller 112 for position estimation. In embodiments, controller 112 may be configured for video/image processing and communication. Specifically, controller 112 may process one or more images captured by one or more cameras of UAV 110, as described below. Although specific flight module and imagery module capabilities are described with reference to controller 112, respectively, the flight module and imagery module may be embodied as separate modules of a single logic device or performed collectively on multiple logic devices.

In embodiments, UAV 110 may include other modules, such as other and/or additional sensors, actuators, communications modules/nodes, and/or user interface devices used to provide additional operational and/or environmental information, for example. In some embodiments, other modules may include navigational or environmental sensors providing measurements and/or other sensor signals that can be displayed to a user and/or used to provide operational control of UAV 110, as described herein. In various embodiments, other modules may include a power supply implemented as any power storage device configured to provide enough power to each element of UAV 110 to keep all such elements active and operable.

FIG. 2B illustrates a diagram of a side view of UAV 110, in accordance with an embodiment of the disclosure. Referring to FIGS. 2A-2B, UAV 110 may include one or more cameras, such as several cameras (e.g., pointing in same or different directions). For example, fixed imaging system(s) 128 and/or imaging system 141 may include a front camera 232 pointing in the direction of travel. In embodiments, front camera 232 may be fixed or connected to gimbal system 123 to aim front camera 232 as desired. Referring to FIG. 2B, fixed imaging system(s) 128 and/or imaging system 141 may include one or more navigation cameras 234 pointing down and to the sides of body 204. Navigation cameras 234 may be fixed or connected to gimbal system 123 to aim navigation cameras 234 as desired. Navigation cameras 234 may support position estimation of UAV 110, such as when GPS data is inaccurate, GNSS 118 is inoperable or not functioning properly, etc. For example, images from navigation cameras 234 (and/or front camera 232) may be provided to controller 112 for analysis (e.g., position estimation).

Front camera 232 and/or navigation cameras 234 may be configured to capture one or more images (e.g., visible and/or non-visible images), such as a stream of images. For example, front camera 232 and/or navigation cameras 234 may be configured to capture visible, infrared, and/or thermal infrared images, among others. Each camera may include an array of sensors (e.g., a multi-sensor suite) for capturing thermal images (e.g., thermal image frames) in response to infrared radiation. In embodiments, front camera 232 and/or navigation cameras 234 may capture short-wave infrared (SWIR) light (e.g., 1-2µm wavelengths), mid-wave infrared (MWIR) light (e.g., 3-5µm wavelengths), and/or long-wave infrared (LWIR) light (e.g., 8-15µm wavelengths). In embodiments, front camera 232 and/or navigation cameras 234 may capture visible and infrared fused images. For instance, both a visible and a thermal representation of a scene (e.g., a search area) may be captured and/or presented to the pilot or another user of the system.

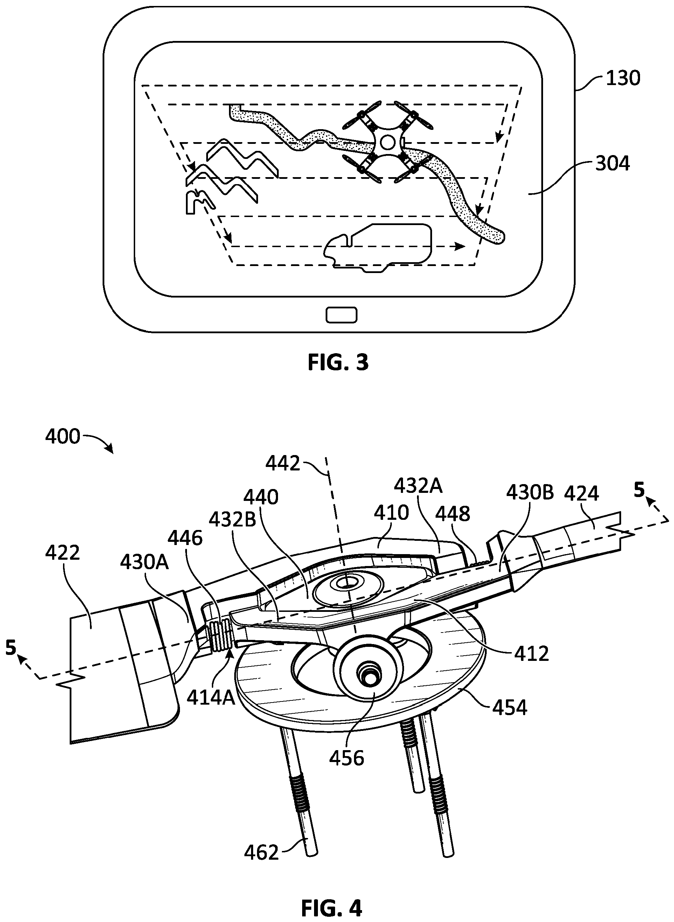

FIG. 3 illustrates a diagram of base station 130, in accordance with an embodiment of the disclosure. Base station 130 may be implemented as one or more of a tablet, a display, a touch screen, a keyboard, a mouse, a joystick, a knob, a steering wheel, and/or any other device capable of accepting user input and/or providing feedback to a user. In various embodiments, base station 130 may provide a user interface 304 (e.g., a graphical user interface) adapted to receive user input. Base station 130 may be implemented with one or more logic devices that may be adapted to store and/or execute instructions, such as software instructions, implementing any of the various processes and/or methods described herein. For example, base station 130 may be adapted to form communication links, transmit and/or receive communications (e.g., sensor signals, control signals, sensor information, user input, and/or other information), for example, or to perform various other processes and/or methods described herein

The pilot may have control of UAV 110 and access to UAV data using base station 130. For example, base station 130 may be connected to UAV 110 using a wireless link, such as a wireless link having enough bandwidth for video and data transmission. Base station 130 may include an image panel and an input panel. In embodiments, user interface 304 may function as both the image panel and the input panel. The image panel may be used to view image/video feeds from one or more cameras on-board UAV 110, such as front camera 232 and/or navigation cameras 234. The input panel may be configured to receive user input, such as via the user's finger, a stylus, etc. For example, input panel may allow the pilot to configure different UAV and/or search settings. In embodiments, base station 130 may provide a map for the pilot to locate UAV 110 during flight. In some embodiments, one or more accessories may be connected to the base station 130, such as a joystick for better flight control of UAV 110. As shown, the base station 130 may be a tablet, although other configurations are contemplated.

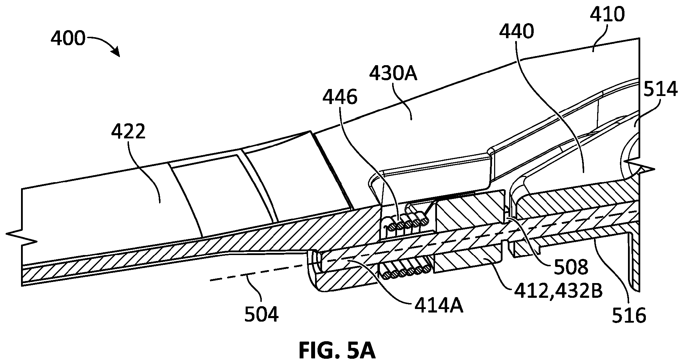

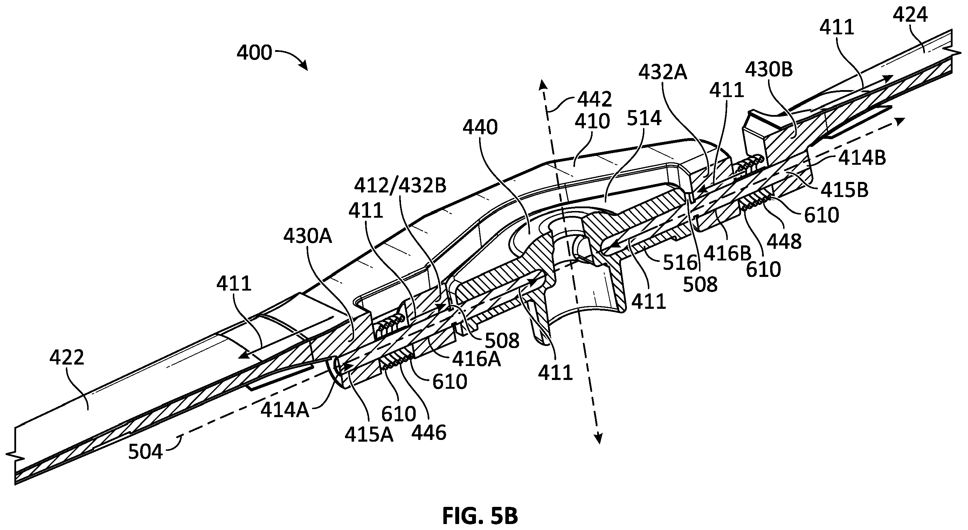

FIG. 4 illustrates a diagram of a rotor blade assembly 400 of UAV 110 in a collective pitch control position, in accordance with an embodiment of the disclosure. Referring to FIG. 4, rotor blade assembly 400 includes multiple rotor arms configured to provide an adjustable motive force (e.g., lift) to UAV 110. Rotor blade assembly 400 includes a first rotor arm 410, a second rotor arm 412, and an axle assembly comprising, for example axles 414A and 414B (axle 414A shown in FIGS. 4 and 5A; axles 414A and 414B shown in Fig. 5B). In this regard, first rotor arm 410 and second rotor arm 412 may be configured to rotate about axles 414A and 414B to adjust a pitch angle of one or more rotor blades. First rotor arm 410 supports a first rotor blade 422, and second rotor arm 412 supports a second rotor blade 424. Rotor blade assembly 400 may include additional rotor arms each supporting a respective rotor blade. In addition, the axle assembly is depicted comprising separate axles 414A and 414B, however other configurations (e.g., a single axle) may also be used as appropriate.

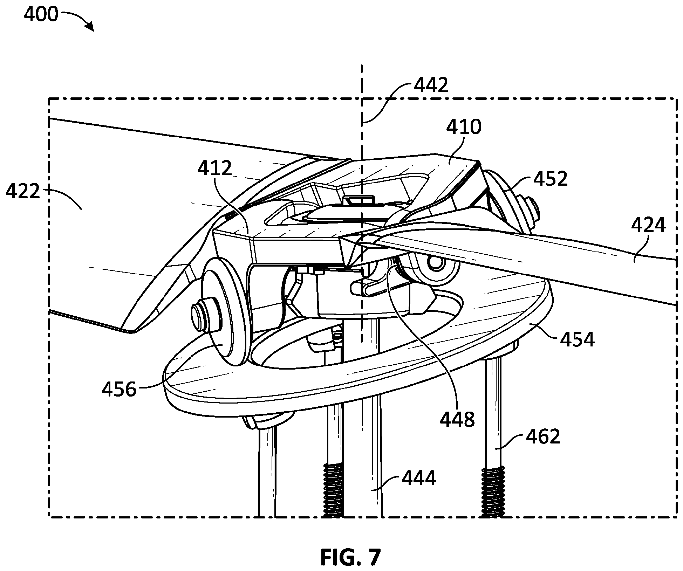

As shown, each of first rotor arm 410 and second rotor arm 412 may include a base portion supporting a respective rotor blade, and an end portion distal from the base portion. For instance, first rotor arm 410 includes base portion 430A supporting first rotor blade 422, and end portion 432A distal from base portion 430A. Similarly, second rotor arm 412 includes base portion 430B supporting second rotor blade 424, and end portion 432B distal from base portion 430B. In embodiments, each rotor arm may be substantially C-shaped, such as to accommodate a rotor hub 440 positioned between the first rotor arm 410 and the second rotor arm 412. For example, end portions 432A, 432B may be defined by an arcuate arm extending from the respective base portions 430A, 430B and around rotor hub 440, although other configurations are contemplated. As described below, rotor hub 440 may be coupled to axles 414A and 414B to rotate first rotor arm 410 and second rotor arm 412 about an axis 442. For example, rotor hub 440 may be driven by a rotor 444 (see FIG. 7), either directly or indirectly, to rotate about axis 442 to rotate first rotor arm 410 and second rotor arm 412 via respective connections to axles 414A and 414B.

With continued reference to FIG. 4, rotor blade assembly 400 includes at least one torsion spring coupled to first rotor arm 410 and second rotor arm 412. For example, rotor blade assembly 400 may include a first torsion spring 446 and a second torsion spring 448. In such embodiments, first torsion spring 446 may be coupled to base portion 430A of first rotor arm 410 and end portion 432B of second rotor arm 412, and second torsion spring 448 may be coupled to base portion 430B of second rotor arm 412 and end portion 432A of first rotor arm 410, as described below.

Rotor blade assembly 400 may include one or more control features. For example, a first wheel 452 (see FIG. 7) may be coupled to first rotor arm 410 to ride on a nonrotating swashplate 454. Similarly, a second wheel 456 may be coupled to second rotor arm 412 to ride on swashplate 454. In such embodiments, a spring force applied by first torsion spring 446 and/or second torsion spring 448 may be configured to press first wheel 452 and second wheel 456 against swashplate 454, as detailed below. As shown, one or more actuator rods 462 may be coupled to swashplate 454 to move swashplate 454 as desired. For example, actuator rods 462 may move up or down collectively to control a collective pitch of first rotor blade 422 and second rotor blade 424 (e.g., the pitch of first rotor blade 422 and second rotor blade 424 are equal or substantially equal).

FIGS. 5A and 5B illustrate a cross-sectional views of rotor blade assembly 400 taken at line 5-5 of FIG. 4, in accordance with embodiments of the disclosure. Axles 414A and 414B may be coupled to each base portion and end portion of first rotor arm 410 and second rotor arm 412, respectively. For example, FIG. 5A illustrates base portion 430A of first rotor arm 410 and end portion 432B of second rotor arm 412 coupled to an end of axle 414A. As further shown in FIG. 5B, base portion 430B of second rotor arm 412 and end portion 432A of first rotor arm 410 may be coupled to axle 414B in a similar manner. In this manner, axles 414A and 414B may define a common pitch axis 504 about which first rotor arm 410 and second rotor arm 412 rotate to control the pitch of first rotor blade 422 and second rotor blade 424. To restrain axial movement of axles 414A and 414B, circlips 508 may be seated onto axles 414A and 414B, such as between each of end portions 432A and 432B and rotor hub 440, although other configurations are contemplated.

As shown, first torsion spring 446 may be positioned about axle 414A between base portion 430A of first rotor arm 410 and end portion 432B of second rotor arm 412. In embodiments, first torsion spring 446 may move freely from axle 414A. Second torsion spring 448 may be positioned and configured similarly with respect to axle 414B.

With continued reference to FIG. 5A, rotor hub 440 may be a two-piece hub configured to capture axles 414A and 414B. For example, rotor hub 440 may include an upper half 514 and a lower half 516, with axles 414A and 414B secured between the halves. Depending on the application, upper half 514 may be secured to lower half 516 via mechanical fasteners, interlocking features, adhesive, welding, other techniques, or combinations thereof.

Referring to FIG. 5B, in some embodiments, rotor blade assembly 400 includes an axle assembly comprised of axles 414A and 414B. In such a configuration, when rotor blade assembly 400 rotates about axis 442, centripetal forces (denoted by arrows 411) operate to pull rotor arms 410/412 and rotor blades 422/424 outward. Such centripetal forces cause end portions 432A/432B of rotor arms 410/412 to push against (e.g., bear upon) circlips 508, resulting in large friction forces that cause rotor arms 410/412 to rotate together with circlips 508 about axis 442 and further causing circlips 508 to be firmly held against axles 414A/414B.

In this configuration, rotor hub 440 may operate as a bearing to axles 414A/414B. In this regard, axles 414A/414B may exhibit a loose fit at their outer portions 415A/415B held by base portions 430A/430B to permit base portions 430A/430B to rotate about axis 504 and axles 414A/414B. In addition, axles 414A/414B may exhibit a tight fit at their inner portions 416A/416B held by end portions 432A/432B to cause axles 414A/414B and end portions 432A/432B rotate together.

In other embodiments, the axle assembly may include only a single axle. In such embodiments, circlips 508 may be replaced by bearings that receive axial forces, inhibit axial movement, and permit rotation of base portions 430A/430B about axis 504, while still permitting the use of torsion springs 446/448.

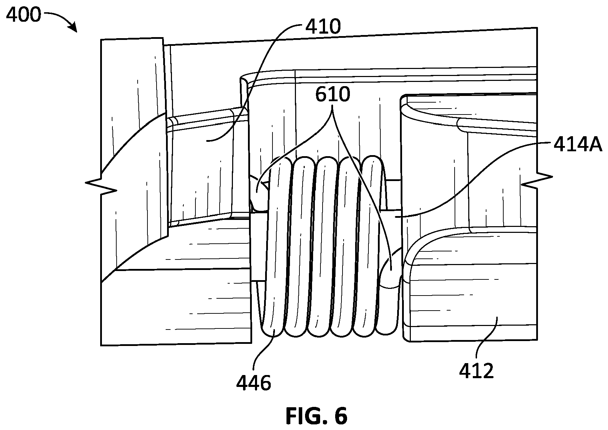

FIG. 6 illustrates an enlarged view of rotor blade assembly 400, in accordance with an embodiment of the disclosure. Referring to FIG. 6, first torsion spring 446 may include opposing ends 610 extending into first rotor arm 410 and second rotor arm 412, such as parallel to axles 414A and 414B, although other configurations are contemplated. For example, the opposing ends 610 of first torsion spring 446 may be positioned within a premade hole in each rotor arm and held in place using only axial and torsional spring force, thereby eliminating a need for glue or another locking mechanism. This configuration in turn facilitates the assembling and replacement of first torsion spring 446. Second torsion spring 448 may be configured similarly.

Due to the coupling of first torsion spring 446 (and second torsion spring 448 where applicable) to first rotor arm 410 and second rotor arm 412, a rotation of one of first rotor arm 410 or second rotor arm 412 about axles 414A/414B may apply a spring force to the other of first rotor arm 410 or second rotor arm 412. For example, increasing the pitch of first rotor blade 422 may cause first torsion spring 446 (and second torsion spring 448 where applicable) to apply a spring force to second rotor arm 412, and vice versa. In embodiments, first torsion spring 446 (and second torsion spring 448 where applicable) may apply an increasing spring force as the pitch of first rotor blade 422 or second blade is increased via swashplate 454. This cross-coupling of first rotor arm 410 and second rotor arm 412 via first torsion spring 446 (and second torsion spring 448 where applicable) provides an elastically coupled assembly.

FIG. 7 illustrates a diagram of rotor blade assembly 400 in a cyclic pitch control position, in accordance with an embodiment of the disclosure. Referring to FIG. 7, portions of swashplate 454 may be moved up or down (e.g., via actuator rods 462) relative to other portions of swashplate 454 to position swashplate 454 at a non-perpendicular angle to axis 442 to provide cyclic pitch control of first rotor blade 422 and second rotor blade 424. In such configurations, the pitch of first rotor blade 422 may vary with rotation of first rotor blade 422 about axis 442, with the pitch of second rotor blade 424 varying similarly but timed 180 degrees from first rotor blade 422. However, because first rotor arm 410 and second rotor arm 412 rotate in a plane parallel to swashplate 454, first torsion spring 446 (and second torsion spring 448 where applicable) may remain in a static state throughout rotation of rotor 444, thereby providing a constant or near constant contact force between first wheel 452 and second wheel 456 and swashplate 454. As a result, embodiments of the present disclosure may provide increased efficiency compared to conventional systems where friction or other dynamic forces change with angle between swashplate 454 and rotor 444.

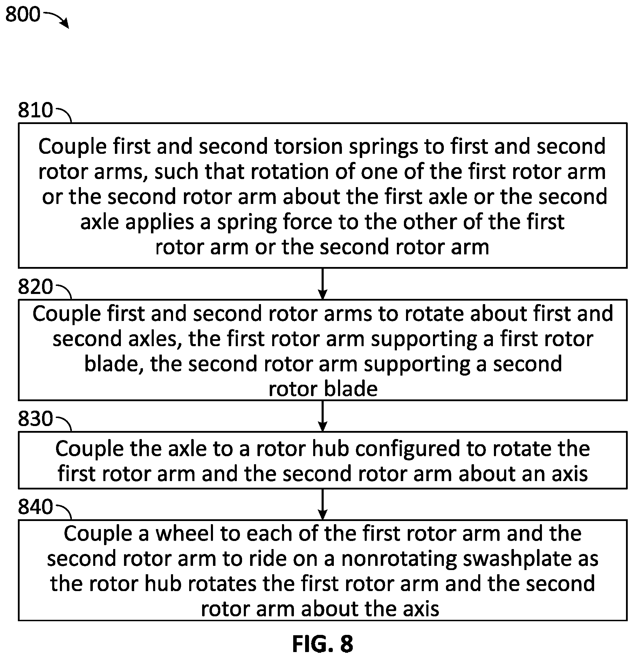

FIG. 8 illustrates a process 800 of assembling a rotor blade assembly, in accordance with an embodiment of the disclosure. Although described with reference to rotor blade assembly 400, process 800 may be used to assemble a different rotor blade assembly. Note that one or more operations of FIG. 8 may be combined, omitted, and/or performed in a different order as desired.

In block 810, process 800 includes coupling first torsion spring 446 and second torsion spring 448 to first rotor arm 410 and second rotor arm 412, such that a rotation of one of first rotor arm 410 or second rotor arm 412 about axle 414A or axle 414B applies a spring force to the other of first rotor arm 410 or second rotor arm 412. Block 820 may include inserting opposing ends 610 of first torsion spring 446 and second torsion spring 448 into first rotor arm 410 and second rotor arm 412 parallel to axles 414A and 414B.

In block 820, process 800 includes coupling first rotor arm 410 and second rotor arm 412 to rotate about axles 414A and 414B. Block 810 may include coupling base portion 430A of first rotor arm 410 and end portion 432B of second rotor arm 412 to axle 414A, and also coupling base portion 430B of second rotor arm 412 and end portion 432A of first rotor arm 410 to axle 414B. For example, axle 414A may be slid through base portion 430A towards and through end portion 432B, and axle 414B may be slid through base portion 430B towards and through end portion 432A.

In some embodiments, blocks 810 and 820 may be performed concurrently. For example, axle 414A may be slid through base portion 430A of first rotor arm 410, first torsion spring 446, and end portion 432B of second rotor arm 412 while opposing ends 610 of first torsion spring 446 are coupled to base portion 430A and end portion 432B. Similarly, axle 414B may be slid through end portion 432A of first rotor arm 410, second torsion spring 448, and base portion 430B of second rotor arm 412 while opposing ends 610 of second torsion spring 448 are coupled to end portion 432A and base portion 430B.

In block 830, process 800 may include coupling axles 414A and 414B to rotor hub 440 configured to rotate first rotor arm 410 and second rotor arm 412 about axis 442. Block 830 may include securing axles 414A and 414B between upper half 514 and lower half 516 of rotor hub 440, such as in a manner as described above.

In block 840, process 800 may include coupling a wheel to each of first rotor arm 410 and second rotor arm 412 to ride on nonrotating swashplate 454 as rotor hub 440 rotates first rotor arm 410 and second rotor arm 412 about axis 442. For example, block 860 may include coupling first wheel 452 to first rotor arm 410 and coupling second wheel 456 to second rotor arm 412 to ride on swashplate 454 during rotation of rotor 444.

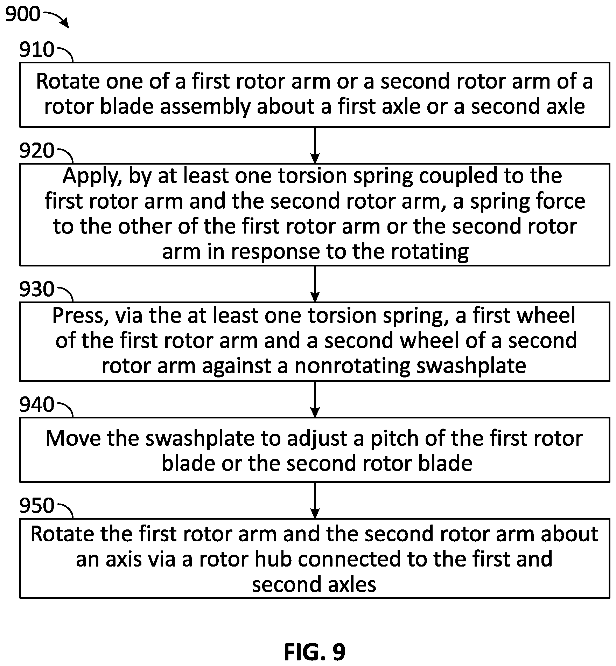

FIG. 9 illustrates a process 900 of operating a rotor blade assembly, in accordance with an embodiment of the disclosure. Although described with reference to rotor blade assembly 400, process 900 may be used to operate a different rotor blade assembly. Note that one or more operations of FIG. 9 may be combined, omitted, and/or performed in a different order as desired.

In block 910, process 900 includes rotating one of first rotor arm 410 or second rotor arm 412 about axle 414A or 414B. For example, first rotor arm 410 may be rotated about axle 414A to adjust the pitch of first rotor blade 422, as detailed above. Second rotor arm 412 may be rotated about axle 414B to adjust the pitch of second rotor blade 424 in a similar manner.

In block 920, process 900 includes applying, by at least one torsion spring coupled to first rotor arm 410 and second rotor arm 412, a spring force to the other of first rotor arm 410 or second rotor arm 412 in response to the rotating. Block 920 may include applying a first spring force by first torsion spring 446 in response to the rotating. Block 920 may include applying a second spring force by second torsion spring 448 in response to the rotating. Block 920 may include applying an increasing spring force as the pitch of first rotor blade 422 or second rotor blade 424 is increased via swashplate 454.

In block 930, process 900 may include pressing, via the at least one torsion spring, first wheel 452 of first rotor arm 410 and second wheel 456 of second rotor arm 412 against swashplate 454. For example, the first spring force and/or the second spring force may create a contact force of first wheel 452 and second wheel 456 against swashplate 454.

In block 940, process 900 may include moving swashplate 454 to adjust a pitch of first rotor blade 422 or second rotor blade 424. For example, swashplate 454 may be moved up or down via actuator rods to adjust the blade angle of first rotor blade 422 or second rotor blade 424 to adjust a motive or lift force provided by first rotor blade 422 or second rotor blade 424. In embodiments, block 940 may cause the rotating of the one of first rotor arm 410 about axle 414A or second rotor arm 412 about axle 414B in block 910.

In block 950, process 900 may include rotating first rotor arm 410 and second rotor arm 412 about axis 442 via rotor hub 440 connected to axles 414A and 414B. For example, first rotor arm 410 and second rotor arm 412 may be rotated about axis 442 during rotation of rotor 444, such as in a manner as described above.

Where applicable, various embodiments provided by the present disclosure can be implemented using hardware, software, or combinations of hardware and software. Also, where applicable, the various hardware components and/or software components set forth herein can be combined into composite components comprising software, hardware, and/or both without departing from the present disclosure. Where applicable, the various hardware components and/or software components set forth herein can be separated into subcomponents comprising software, hardware, or both without departing from the present disclosure. In addition, where applicable, it is contemplated that software components can be implemented as hardware components, and vice versa.

Software in accordance with the present disclosure, such as non-transitory instructions, program code, and/or data, can be stored on one or more non-transitory machine readable mediums. It is also contemplated that software identified herein can be implemented using one or more general purpose or specific purpose computers and/or computer systems, networked and/or otherwise. Where applicable, the ordering of various steps described herein can be changed, combined into composite steps, and/or separated into sub-steps to provide features described herein.

The foregoing description is not intended to limit the present disclosure to the precise forms or particular fields of use disclosed. Embodiments described above illustrate but do not limit the invention. It is contemplated that various alternate embodiments and/or modifications to the present invention, whether explicitly described or implied herein, are possible in light of the disclosure. Accordingly, the scope of the invention is defined only by the following claims.

## Claims

1. A system comprising:
a rotor blade assembly (400) comprising:
an axle assembly,
a first rotor arm (410) supporting a first rotor blade (422) and coupled to rotate about the axle assembly,
a first wheel (452) coupled to the first rotor arm (410) and configured to ride on a swashplate (454),
a second rotor arm (412) supporting a second rotor blade (424) and coupled to rotate about the axle assembly,
a second wheel (456) coupled to the second rotor arm (412) and configured to ride on the swashplate (454), and
a torsion spring coupled to the first rotor arm (410) and the second rotor arm (412), such that a rotation of one of the first rotor arm (410) or the second rotor arm (412) about the axle assembly applies a spring force to the other of the first rotor arm (410) or the second rotor arm (412), wherein the spring force applied by the torsion spring is configured to press the first wheel (452) and the second wheel (456) against the swashplate (454).

2. The system of claim 1, wherein:
the axle assembly comprises a first axle (414A) and a second axle (414B);
each of the first rotor arm (410) and the second rotor arm (412) comprises:
a base portion (430A, 430B) supporting a respective rotor blade (422, 424), and
an end portion (432A, 432B) distal from the base portion (430A, 430B);
the first axle (414A) is coupled to the base portion (430A) of the first rotor arm (410) and the end portion (432B) of the second rotor arm (412);
the second axle (414B) is coupled to the base portion (430B) of the second rotor arm (412) and the end portion (432A) of the first rotor arm (410); and wherein:
the torsion spring is a first torsion spring (446) coupled to the base portion (430A) of the first rotor arm (410) and the end portion (432B) of the second rotor arm (412); and
the rotor blade assembly (400) further comprises a second torsion spring (448) coupled to the base portion (430B) of the second rotor arm (412) and the end portion (432A) of the first rotor arm (410).

3. The system of claim 1, wherein the torsion spring comprises opposing ends extending into the first rotor arm (410) and the second rotor arm (412) parallel to a rotational axis of the axle assembly.

4. The system of claim 1, further comprising a rotor hub (440) coupled to the axle assembly to rotate the first rotor arm (410) and the second rotor arm (412) about an axis.

5. The system of claim 1, wherein the torsion spring is configured to apply an increasing spring force as a pitch of the first rotor blade (422) or the second rotor blade (424) is increased via the swashplate (454).

6. The system of claim 1, wherein the swashplate is a nonrotating swashplate (454) and wherein the system further comprises:
one or more actuator rods (462) configured to move the nonrotating swashplate.

7. The system of claim 1, wherein the system is an unmanned aerial vehicle, UAV (110).

8. A method (800) of assembling a rotor blade assembly (400), the method comprising:
coupling (820) a first rotor arm (410) to rotate about an axle assembly, the first rotor arm (410) supporting a first rotor blade (422);
coupling (820) a second rotor arm (412) to rotate about the axle assembly, the second rotor arm (412) supporting a second rotor blade (424);
coupling (840) a first wheel (452) and a second wheel (456) to each of the first rotor arm (410) and the second rotor arm (412), respectively, to ride on a swashplate (454); and
coupling (810) a torsion spring to the first rotor arm (410) and the second rotor arm (412), such that a rotation of one of the first rotor arm (410) or the second rotor arm (412) about the axle assembly applies a spring force to the other of the first rotor arm (410) or the second rotor arm (412), wherein the spring force applied by the torsion spring presses the first wheel (452) and the second wheel (456) against the swashplate (454).

9. The method (800) of claim 8, wherein the coupling the torsion spring comprises inserting opposing ends of the torsion spring into the first rotor arm (410) and the second rotor arm (412) parallel to a rotational axis of the axle assembly.

10. The method (800) of claim 8, wherein:
the axle assembly comprises a first axle (414A) and a second axle (414B);
the first axle (414A) is coupled to the base portion (430A) of the first rotor arm (410) and the end portion (432B) of the second rotor arm (412); and
the second axle (414B) is coupled to the base portion (430B) of the second rotor arm (412) and the end portion (432A) of the first rotor arm (410).

11. The method (800) of claim 8, wherein the torsion spring is a first torsion spring (446), wherein the spring force is a first spring force, and the method further comprises coupling a second torsion spring (448) to the first rotor arm (410) and the second rotor arm (412), such that the rotation of the first rotor arm (410) about the first axle (414A) or the second rotor arm (412) about the second axle (414B) applies a second spring force to the other of the first rotor arm (410) or the second rotor arm (412).

12. The method (800) of claim 8, further comprising coupling the axle assembly to a rotor hub (440) configured to rotate the first rotor arm (410) and the second rotor arm (412) about an axis, wherein the swashplate (454) is a nonrotating swashplate, and wherein the first and second wheels (452, 456)ride on the nonrotating swashplate as the rotor hub rotates the first rotor arm and the second rotor arm about the axis.

13. A method (900) of operating a rotor blade assembly (400), comprising:
rotating (910) one of a first rotor arm (410) or a second rotor arm (412) of the rotor blade assembly (400) about an axle assembly, wherein both the first rotor arm (410) and the second rotor arm (412) are coupled to rotate about the axle assembly;
applying (920), by at least one torsion spring coupled to the first rotor arm (410) and the second rotor arm (412), a spring force to the other of the first rotor arm (410) or the second rotor arm (412) in response to the rotating; and
pressing, via the at least one torsion spring, a first wheel (452) of the first rotor arm (410) and a second wheel (456) of the second rotor arm (412) against a swashplate (454).

14. The method of claim 13, wherein:
the first rotor arm (410) supports a first rotor blade (422) and the second rotor arm (412) supports a second rotor blade (424);
the method further comprises moving the swashplate (454) to adjust a pitch of the first rotor blade (422) or the second rotor blade (424);
the moving causes the rotating of the one of the first rotor arm (410) or the second rotor arm (412);
wherein the applying comprises applying an increasing spring force as the pitch of the first rotor blade (422) or the second rotor blade (424) is increased via the swashplate (454); and
wherein the swashplate (454) is a nonrotating swashplate.

15. The method of claim 13, further comprising rotating the first rotor arm (410) and the second rotor arm (412) about an axis via a rotor hub (440) connected to the axle assembly.

## Patentansprüche

1. Ein System, das Folgendes beinhaltet:
eine Rotorblattanordnung (400), die Folgendes beinhaltet:
eine Achsanordnung,
einen ersten Rotorarm (410), der ein erstes Rotorblatt (422) trägt und gekoppelt ist, um sich um die Achsanordnung zu drehen,
ein erstes Rad (452), das mit dem ersten Rotorarm (410) gekoppelt und konfiguriert ist, um auf einer Taumelscheibe (454) zu fahren,
einen zweiten Rotorarm (412), der ein zweites Rotorblatt (424) trägt und gekoppelt ist, um sich um die Achsanordnung zu drehen,
ein zweites Rad (456), das mit dem zweiten Rotorarm (412) gekoppelt und konfiguriert ist, um auf der Taumelscheibe (454) zu fahren, und
eine Torsionsfeder, die mit dem ersten Rotorarm (410) und dem zweiten Rotorarm (412) gekoppelt ist, sodass eine Drehung von einem von dem ersten Rotorarm (410) oder dem zweiten Rotorarm (412) um die Achsanordnung eine Federkraft auf den anderen von dem ersten Rotorarm (410) oder dem zweiten Rotorarm (412) ausübt, wobei die von der Torsionsfeder ausgeübte Federkraft konfiguriert ist, um das erste Rad (452) und das zweite Rad (456) gegen die Taumelscheibe (454) zu drücken.

2. System gemäß Anspruch 1, wobei:
die Achsanordnung eine erste Achse (414A) und eine zweite Achse (414B) beinhaltet; jeder von dem ersten Rotorarm (410) und dem zweiten Rotorarm (412) Folgendes beinhaltet:
einen Basisabschnitt (430A, 430B), der ein jeweiliges Rotorblatt (422, 424) trägt, und
einen Endabschnitt (432A, 432B) distal von dem Basisabschnitt (430A, 430B);
die erste Achse (414A) mit dem Basisabschnitt (430A) des ersten Rotorarms (410) und dem Endabschnitt (432B) des zweiten Rotorarms (412) gekoppelt ist;
die zweite Achse (414B) mit dem Basisabschnitt (430B) des zweiten Rotorarms (412) und dem Endabschnitt (432A) des ersten Rotorarms (410) gekoppelt ist; und wobei:
die Torsionsfeder eine erste Torsionsfeder (446) ist, die mit dem Basisabschnitt (430A) des ersten Rotorarms (410) und dem Endabschnitt (432B) des zweiten Rotorarms (412) gekoppelt ist; und
die Rotorblattanordnung (400) ferner eine zweite Torsionsfeder (448) beinhaltet, die mit dem Basisabschnitt (430B) des zweiten Rotorarms (412) und dem Endabschnitt (432A) des ersten Rotorarms (410) gekoppelt ist.

3. System gemäß Anspruch 1, wobei die Torsionsfeder gegenüberliegende Enden beinhaltet, die sich parallel zu einer Drehachse der Achsanordnung in den ersten Rotorarm (410) und den zweiten Rotorarm (412) erstrecken.

4. System gemäß Anspruch 1, das ferner eine Rotornabe (440) beinhaltet, die mit der Achsanordnung gekoppelt ist, um den ersten Rotorarm (410) und den zweiten Rotorarm (412) um eine Achse zu drehen.

5. System gemäß Anspruch 1, wobei die Torsionsfeder konfiguriert ist, um eine zunehmende Federkraft auszuüben, wenn eine Steigung des ersten Rotorblatts (422) oder des zweiten Rotorblatts (424) über die Taumelscheibe (454) erhöht wird.

6. System gemäß Anspruch 1, wobei die Taumelscheibe eine nicht drehende Taumelscheibe (454) ist und wobei das System ferner Folgendes beinhaltet:
eine oder mehrere Aktuatorstangen (462), die konfiguriert sind, um die nicht drehende Taumelscheibe zu bewegen.

7. System gemäß Anspruch 1, wobei das System ein unbemanntes Luftfahrzeug, UAV (110), ist.

8. Ein Verfahren (800) zum Zusammenbauen einer Rotorblattanordnung (400), wobei das Verfahren Folgendes beinhaltet:
Koppeln (820) eines ersten Rotorarms (410), um sich um eine Achsanordnung zu drehen, wobei der erste Rotorarm (410) ein erstes Rotorblatt (422) trägt;
Koppeln (820) eines zweiten Rotorarms (412), um sich um die Achsanordnung zu drehen, wobei der zweite Rotorarm (412) ein zweites Rotorblatt (424) trägt;
Koppeln (840) eines ersten Rads (452) mit dem ersten Rotorarm (410) und eines zweiten Rads (456) mit dem zweiten Rotorarm (412), jeweils um auf einer Taumelscheibe (454) zu fahren; und
Koppeln (810) einer Torsionsfeder mit dem ersten Rotorarm (410) und dem zweiten Rotorarm (412), sodass eine Drehung von einem von dem ersten Rotorarm (410) oder dem zweiten Rotorarm (412) um die Achsanordnung eine Federkraft auf den anderen von dem ersten Rotorarm (410) oder dem zweiten Rotorarm (412) ausübt, wobei die von der Torsionsfeder ausgeübte Federkraft das erste Rad (452) und das zweite Rad (456) gegen die Taumelscheibe (454) drückt.

9. Verfahren (800) gemäß Anspruch 8, wobei das Koppeln der Torsionsfeder das Einführen von gegenüberliegenden Enden der Torsionsfeder in den ersten Rotorarm (410) und den zweiten Rotorarm (412) parallel zu einer Drehachse der Achsanordnung beinhaltet.

10. Verfahren (800) gemäß Anspruch 8, wobei:
die Achsanordnung eine erste Achse (414A) und eine zweite Achse (414B) beinhaltet;
die erste Achse (414A) mit dem Basisabschnitt (430A) des ersten Rotorarms (410) und dem Endabschnitt (432B) des zweiten Rotorarms (412) gekoppelt ist; und
die zweite Achse (414B) mit dem Basisabschnitt (430B) des zweiten Rotorarms (412) und dem Endabschnitt (432A) des ersten Rotorarms (410) gekoppelt ist.

11. Verfahren (800) gemäß Anspruch 8, wobei die Torsionsfeder eine erste Torsionsfeder (446) ist, wobei die Federkraft eine erste Federkraft ist und das Verfahren ferner das Koppeln einer zweiten Torsionsfeder (448) mit dem ersten Rotorarm (410) und dem zweiten Rotorarm (412) beinhaltet, sodass die Drehung des ersten Rotorarms (410) um die erste Achse (414A) oder des zweiten Rotorarms (412) um die zweite Achse (414B) eine zweite Federkraft auf den anderen von dem ersten Rotorarm (410) oder dem zweiten Rotorarm (412) ausübt.

12. Verfahren (800) gemäß Anspruch 8, das ferner das Koppeln der Achsanordnung mit einer Rotornabe (440) beinhaltet, die konfiguriert ist, um den ersten Rotorarm (410) und den zweiten Rotorarm (412) um eine Achse zu drehen, wobei die Taumelscheibe (454) eine nicht drehende Taumelscheibe ist und wobei das erste und das zweite Rad (452, 456) auf der nicht drehenden Taumelscheibe fahren, wenn die Rotornabe den ersten Rotorarm und den zweiten Rotorarm um die Achse dreht.

13. Ein Verfahren (900) zum Betreiben einer Rotorblattanordnung (400), das Folgendes beinhaltet:
Drehen (910) eines von einem ersten Rotorarm (410) oder einem zweiten Rotorarm (412) der Rotorblattanordnung (400) um eine Achsanordnung, wobei sowohl der erste Rotorarm (410) als auch der zweite Rotorarm (412) gekoppelt sind, um sich um die Achsanordnung zu drehen;
Ausüben (920), durch mindestens eine Torsionsfeder, die mit dem ersten Rotorarm (410) und dem zweiten Rotorarm (412) gekoppelt ist, einer Federkraft auf den anderen von dem ersten Rotorarm (410) oder dem zweiten Rotorarm (412) als Reaktion auf das Drehen; und
Drücken, über die mindestens eine Torsionsfeder, eines ersten Rads (452) des ersten Rotorarms (410) und eines zweiten Rads (456) des zweiten Rotorarms (412) gegen eine Taumelscheibe (454).

14. Verfahren gemäß Anspruch 13, wobei:
der erste Rotorarm (410) ein erstes Rotorblatt (422) trägt und der zweite Rotorarm (412) ein zweites Rotorblatt (424) trägt;
das Verfahren ferner das Bewegen der Taumelscheibe (454) beinhaltet, um eine Steigung des ersten Rotorblatts (422) oder des zweiten Rotorblatts (424) einzustellen;
das Bewegen das Drehen des einen von dem ersten Rotorarm (410) oder dem zweiten Rotorarm (412) bewirkt;
wobei das Ausüben das Ausüben einer zunehmenden Federkraft beinhaltet, wenn die Steigung des ersten Rotorblatts (422) oder des zweiten Rotorblatts (424) über die Taumelscheibe (454) erhöht wird; und
wobei die Taumelscheibe (454) eine nicht drehende Taumelscheibe ist.

15. Verfahren gemäß Anspruch 13, das ferner das Drehen des ersten Rotorarms (410) und des zweiten Rotorarms (412) um eine Achse über eine Rotornabe (440), die mit der Achsanordnung verbunden ist, beinhaltet.

## Revendications

1. Un système comprenant :
un assemblage de pales de rotor (400) comprenant :
un assemblage d'essieux,
un premier bras de rotor (410) supportant une première pale de rotor (422) et couplé pour tourner autour de l'assemblage d'essieux,
une première roue (452) couplée au premier bras de rotor (410) et configurée pour monter sur un plateau cyclique (454),
un deuxième bras de rotor (412) supportant une deuxième pale de rotor (424) et couplé pour tourner autour de l'assemblage d'essieux,
une deuxième roue (456) couplée au deuxième bras de rotor (412) et configurée pour monter sur le plateau cyclique (454), et
un ressort de torsion couplé au premier bras de rotor (410) et au deuxième bras de rotor (412), de telle sorte qu'une rotation de l'un d'entre le premier bras de rotor (410) ou le deuxième bras de rotor (412) autour de l'assemblage d'essieux applique une force de ressort à l'autre d'entre le premier bras de rotor (410) ou le deuxième bras de rotor (412), la force de ressort appliquée par le ressort de torsion étant configurée pour presser la première roue (452) et la deuxième roue (456) contre le plateau cyclique (454).

2. Le système de la revendication 1, dans lequel :
l'assemblage d'essieux comprend un premier essieu (414A) et un deuxième essieu (414B) ;
chacun d'entre le premier bras de rotor (410) et le deuxième bras de rotor (412) comprend :
une portion formant base (430A, 430B) supportant une pale de rotor (422, 424) respective, et
une portion formant extrémité (432A, 432B) distale de la portion formant base (430A, 430B) ;
le premier essieu (414A) est couplé à la portion formant base (430A) du premier bras de rotor (410) et à la portion formant extrémité (432B) du deuxième bras de rotor (412) ;
le deuxième essieu (414B) est couplé à la portion formant base (430B) du deuxième bras de rotor (412) et à la portion formant extrémité (432A) du premier bras de rotor (410) ; et dans lequel :
le ressort de torsion est un premier ressort de torsion (446) couplé à la portion formant base (430A) du premier bras de rotor (410) et à la portion formant extrémité (432B) du deuxième bras de rotor (412) ; et
l'assemblage de pales de rotor (400) comprend en outre un deuxième ressort de torsion (448) couplé à la portion formant base (430B) du deuxième bras de rotor (412) et à la portion formant extrémité (432A) du premier bras de rotor (410).

3. Le système de la revendication 1, dans lequel le ressort de torsion comprend des extrémités opposées s'étendant dans le premier bras de rotor (410) et le deuxième bras de rotor (412) parallèlement à un axe de rotation de l'assemblage d'essieux.

4. Le système de la revendication 1, comprenant en outre un moyeu de rotor (440) couplé à l'assemblage d'essieux pour faire tourner le premier bras de rotor (410) et le deuxième bras de rotor (412) autour d'un axe.

5. Le système de la revendication 1, dans lequel le ressort de torsion est configuré pour appliquer une force de ressort croissante à mesure qu'un pas de la première pale de rotor (422) ou de la deuxième pale de rotor (424) est augmenté par l'intermédiaire du plateau cyclique (454).

6. Le système de la revendication 1, dans lequel le plateau cyclique est un plateau cyclique non rotatif (454) et le système comprenant en outre :
une ou plusieurs tiges d'actionneur (462) configurées pour mouvoir le plateau cyclique non rotatif.

7. Le système de la revendication 1, le système étant un aéronef sans pilote, ASP (110).

8. Un procédé (800) consistant à assembler un assemblage de pales de rotor (400), le procédé comprenant :
le couplage (820) d'un premier bras de rotor (410) pour qu'il tourne autour d'un assemblage d'essieux, le premier bras de rotor (410) supportant une première pale de rotor (422) ;
le couplage (820) d'un deuxième bras de rotor (412) pour qu'il tourne autour de l'assemblage d'essieux, le deuxième bras de rotor (412) supportant une deuxième pale de rotor (424) ;
le couplage (840) d'une première roue (452) et d'une deuxième roue (456) à chacun d'entre le premier bras de rotor (410) et le deuxième bras de rotor (412), respectivement, pour qu'elles montent sur un plateau cyclique (454) ; et
le couplage (810) d'un ressort de torsion au premier bras de rotor (410) et au deuxième bras de rotor (412), de telle sorte qu'une rotation de l'un d'entre le premier bras de rotor (410) ou le deuxième bras de rotor (412) autour de l'assemblage d'essieux applique une force de ressort à l'autre d'entre le premier bras de rotor (410) ou le deuxième bras de rotor (412), la force de ressort appliquée par le ressort de torsion pressant la première roue (452) et la deuxième roue (456) contre le plateau cyclique (454).

9. Le procédé (800) de la revendication 8, dans lequel le couplage du ressort de torsion comprend l'insertion d'extrémités opposées du ressort de torsion dans le premier bras de rotor (410) et le deuxième bras de rotor (412) parallèlement à un axe de rotation de l'assemblage d'essieux.

10. Le procédé (800) de la revendication 8, dans lequel :
l'assemblage d'essieux comprend un premier essieu (414A) et un deuxième essieu (414B) ;
le premier essieu (414A) est couplé à la portion formant base (430A) du premier bras de rotor (410) et à la portion formant extrémité (432B) du deuxième bras de rotor (412) ; et
le deuxième essieu (414B) est couplé à la portion formant base (430B) du deuxième bras de rotor (412) et à la portion formant extrémité (432A) du premier bras de rotor (410).

11. Le procédé (800) de la revendication 8, dans lequel le ressort de torsion est un premier ressort de torsion (446), dans lequel la force de ressort est une première force de ressort, et le procédé comprenant en outre le couplage d'un deuxième ressort de torsion (448) au premier bras de rotor (410) et au deuxième bras de rotor (412), de telle sorte que la rotation du premier bras de rotor (410) autour du premier essieu (414A) ou du deuxième bras de rotor (412) autour du deuxième essieu (414B) applique une deuxième force de ressort à l'autre d'entre le premier bras de rotor (410) ou le deuxième bras de rotor (412).

12. Le procédé (800) de la revendication 8, comprenant en outre le couplage de l'assemblage d'essieux à un moyeu de rotor (440) configuré pour faire tourner le premier bras de rotor (410) et le deuxième bras de rotor (412) autour d'un axe, dans lequel le plateau cyclique (454) est un plateau cyclique non rotatif, et dans lequel les première et deuxième roues (452, 456) montent sur le plateau cyclique non rotatif à mesure que le moyeu de rotor fait tourner le premier bras de rotor et le deuxième bras de rotor autour de l'axe.

13. Un procédé (900) de fonctionnement d'un assemblage de pales de rotor (400), comprenant :
la mise en rotation (910) de l'un d'entre un premier bras de rotor (410) ou un deuxième bras de rotor (412) de l'assemblage de pales de rotor (400) autour d'un assemblage d'essieux, à la fois le premier bras de rotor (410) et le deuxième bras de rotor (412) étant couplés pour tourner autour de l'assemblage d'essieux ;
l'application (920), par au moins un ressort de torsion couplé au premier bras de rotor (410) et au deuxième bras de rotor (412), d'une force de ressort à l'autre d'entre le premier bras de rotor (410) ou le deuxième bras de rotor (412) en réponse à la mise en rotation ; et
la pression, par l'intermédiaire de l'au moins un ressort de torsion, d'une première roue (452) du premier bras de rotor (410) et d'une deuxième roue (456) du deuxième bras de rotor (412) contre un plateau cyclique (454).

14. Le procédé de la revendication 13, dans lequel :
le premier bras de rotor (410) supporte une première pale de rotor (422) et le deuxième bras de rotor (412) supporte une deuxième pale de rotor (424) ;
le procédé comprenant en outre la mise en mouvement du plateau cyclique (454) pour régler un pas de la première pale de rotor (422) ou de la deuxième pale de rotor (424) ;
la mise en mouvement provoque la mise en rotation de l'un d'entre le premier bras de rotor (410) ou le deuxième bras de rotor (412) ;
dans lequel l'application comprend l'application d'une force de ressort croissante à mesure que le pas de la première pale de rotor (422) ou de la deuxième pale de rotor (424) est augmenté par l'intermédiaire du plateau cyclique (454) ; et
dans lequel le plateau cyclique (454) est un plateau cyclique non rotatif.

15. Le procédé de la revendication 13, comprenant en outre la mise en rotation du premier bras de rotor (410) et du deuxième bras de rotor (412) autour d'un axe par l'intermédiaire d'un moyeu de rotor (440) relié à l'assemblage d'essieux.
